# EUROPÄISCHE PATENTANMELDUNG

(11) **EP 1 150 104 A2**
(43) Veröffentlichungstag der Anmeldung: **31.10.2001**
(21) Anmeldenummer: 01108474.6
(22) Anmeldetag: 04.04.2001
(51) Int. Cl.: G01F 1/84

(54) **Massendurchflussmessgerät**

(30) Priorität: 12.04.2000 DE 10017963
(71) Anmelder: Krohne AG, 4019 Basel (CH)
(72) Erfinder: Hussain, Yousif, Dr., Weston Favell, Northampton NN3 3DA (GB); Rolph, Chris, Salcey Lawn, Hartwell, Northants NN7 2HA (GB)
(74) Vertreter: Gesthuysen, von Rohr & Eggert

(57) **Zusammenfassung**

Beschrieben und dargestellt ist ein Massendurchflußmeßgerät für strömende Medien, das nach dem Coriolis-Prinzip arbeitet, zur Montage an eine ein strömendes Medium führende, vorzugsweise gerade Leitung (1), mit mindestens einem Meßwertaufnehmer, mit dem Coriolis-Kräfte und/oder auf Coriolis-Kräften beruhende Schwingungen der Leitung (1) erfaßbar sind, und mit einer Brücke (2), wobei der Meßwertaufnehmer an der Brücke (2) befestigt ist und die Brücke (2) an der Leitung (1) befestigbar ist.

Ein kompaktes und an bestehende Leitungen eines Leitungssystems montierbares Massendurchflußmeßgerät wird dadurch erzielt, daß die Brücke (2) zur Montage an der Leitung (1) radial an diese ansetzbar ist.

## Beschreibung

Die Erfindung betrifft ein Massendurchflußmeßgerät für strömende Medien, das nach dem Coriolis-Prinzip arbeitet, zur Montage an eine ein strömendes Medium führende, vorzugsweise gerade Leitung, mit mindestens einem Meßwertaufnehmer, mit dem Coriolis-Kräfte und/oder auf Coriolis-Kräften beruhende Schwingungen der Leitung erfaßbar sind, und mit einer Brücke, wobei der Meßwertaufnehmer an der Brücke befestigt ist und die Brücke an der Leitung befestigbar ist.

Herkömmliche Massendurchflußmeßgeräte für strömende Medien, die nach dem Coriolis-Prinzip arbeiten, weisen typischerweise zusätzlich wenigstens einen Schwingungserzeuger auf, mit dem die Leitung anregbar ist, wobei der Schwingungserzeuger im allgemeinen an der Brücke befestigt ist, und sind bisher lediglich als abgeschlossene Geräte verfügbar gewesen, die eine eigene Coriolis-Leitung aufweisen. Mit jeweils an den Enden der Coriolis-Leitung angebrachten Flanschen kann ein solches Massendurchflußmeßgerät dann in ein ein strömendes Medium führendes Leitungssystem eingebaut werden, indem ein der Länge der Coriolis-Leitung des Massendurchflußmeßgeräts entsprechender Bereich einer Leitung des Leitungssystems entfernt wird und statt dessen das Massendurchflußmeßgerät an dieser Stelle eingesetzt wird. Dementsprechend muß aus der das strömende Medium führenden Leitung ein Abschnitt herausgetrennt werden, und an die verbleibenden Enden der Leitung müssen zu den Anschlußflanschen des Massendurchflußmeßgeräts passende Anschlußflansche angeschweißt werden.

Ist die Anlage, zu der das Leitungssystem gehört, nun schon in Betrieb, so muß zum Zwecke des Einbaus des Massendurchflußmeßgeräts entweder der Produktionsablauf der Anlage unterbrochen werden, oder es muß eine Ausweichleitung zur Verfügung gestellt werden. Die Installation herkömmlicher Massendurchflußmeßgeräte für strömende Medien, die nach dem Coriolis-Prinzip arbeiten, erfordert demnach einerseits eine relativ arbeitsintensive Installation des Massendurchflußmeßgeräts und andererseits im allgemeinen eine Unterbrechung des Produktionsablaufs der Anlage, in dessen Leitungssystem das Massendurchflußmeßgerät eingebaut werden soll.

Um die beschriebenen Probleme zu vermeiden, wird in der DE 44 17 332 C2 die Möglichkeit angesprochen, Schwingungserzeuger und Meßwertaufnehmer an einer bereits bestehenden Leitung eines Leitungssystems anzubringen. Dabei ergibt sich jedoch als weiteres Problem, daß Schwingungserzeuger und Meßwertaufnehmer eine Abstützung an einem Widerlager erfahren müssen, um die Leitung anregen zu können bzw. Coriolis-Kräfte und/oder auf Coriolis-Kräften beruhende Coriolis-Schwingungen erfassen zu können. Die Anbringung solcher Widerlager ist jedoch beispielsweise in komplexen chemischen Anlagen nahezu unmöglich, zumindest jedoch sehr aufwendig. Ein mit dem erforderlichen Widerlager verbundenes Problem besteht ferner darin, daß sich bei den herkömmlichen Massendurchflußmeßgeräten für strömende Medien, die ein Gehäuse, Anschlußflansche und genau eine das strömende Medium führende Coriolis-Leitung aufweisen, Schwingungserzeuger und Meßwertaufnehmer an dem Gehäuse als Widerlager abstützen und dadurch das Gehäuse in eine Schwingung um seine Ruhelage versetzt wird. Dies führt dazu, daß einerseits ein Teil der vom Schwingungserzeuger aufgebrachten Schwingungsenergie verloren geht und daß andererseits Schwingungen der Anschlußleitungen das Meßergebnis verfälschen können.

Zur Vermeidung der mit dem Widerlager verbundenen Probleme ist schon vorgeschlagen worden (vgl. die DE 44 17 332 C2), den Schwingungserzeuger und vorzugsweise auch den Meßwertaufnehmer außer mit der Leitung des Leitungssystems ausschließlich mit jeweils einer ausschließlich mit dem Schwingungserzeuger und gegebenenfalls dem Meßwertaufnehmer verbundenen Gegenmasse zu verbinden, wobei die Leitung durch den Schwingungserzeuger in der Waagerechten anregbar sein soll. Auf diese Weise wird jedoch als Massendurchflußmeßgerät kein kompaktes Gerät erzielt, da der oder die Schwingungserzeuger und der Meßwertaufnehmer jeweils als voneinander getrennte Einheiten mit einer eigenen Gegenmasse ausgeführt sind. Dies führt bei der Montage eines solchen Massendurchflußmeßgeräts an eine bestehende Leitung unter anderem zu einem Problem bei der genauen Positionierung der einzelnen Einheiten, insbesondere nämlich betreffend den Abstand zwischen Schwingungserzeuger und Meßwertaufnehmer bzw. betreffend den Abstand zwischen zwei Meßwertaufnehmern. Insbesondere bei der Verwendung von zwei Meßwertaufnehmern ist jedoch deren genaue symmetrische Ausrichtung zum Schwingungserzeuger sowie deren genauer Abstand voneinander für genaue Meßergebnisse wesentlich.

Dementsprechend ist es die Aufgabe der Erfindung, ein Massendurchflußmeßgerät für strömende Medien, das nach dem Coriolis-Prinzip arbeitet, anzugeben, das an eine bestehende Leitung montiert werden kann und das als kompaktes Gerät ausgeführt ist.

Das erfindungsgemäße Massendurchflußmeßgerät für strömende Medien, das nach dem Coriolis-Prinzip arbeitet und mit dem die zuvor hergeleitete und aufgezeigte Aufgabe gelöst ist, ist dadurch gekennzeichnet, daß die Brücke zur Montage an der Leitung radial an dieser ansetzbar ist. Im Gegensatz zu den herkömmlichen Massendurchflußmeßgeräten, die als abgeschlossenene Geräte ausgeführt sind, ist somit eine seitlich auf ihrer gesamten Länge offene Brücke vorgesehen, so daß eine Montage des Massendurchflußmeßgeräts mit dieser Brücke radial, also von der Seite bzw. von oben oder unten her, auf eine bestehende Leitung eines Leitungssystems möglich ist. Da die Brücke im Querschnitt keine geschlossene Form aufweist, muß sie nicht in Längsrichtung der Leitung auf diese aufgeschoben werden, was bei einer schon vorhandenen Leitung in einem Leitungssystem gar nicht möglich ist, sondern kann z. B. von der Seite her auf die Leitung aufgesetzt werden.

Die Schwingungsanregung der Leitung kann durch schon vorhandene Schwingungen in dem Leitungssystem erfolgen, deren Bestandteil die Leitung ist, an die das erfindungsgemäße Massendurchflußmeßgerät angebracht wird. Solche Schwingungen treten z. B. aufgrund von Pumpen oder anderen Geräten auf, die Bestandteil des Leitungssystems sind oder wenigstens mechanisch mit diesem verbunden sind. Um jedoch eine gut reproduzierbare Schwingungsanregung der Leitung zu erzielen und insbesondere eine Schwingungsanregung der Leitung mit einer Resonanzfrequenz der Leitung zu ermöglichen, ist gemäß einer bevorzugten Weiterbildung der Erfindung mindestens ein Schwingungserzeuger vorgesehen, mit dem die Leitung anregbar ist, wobei der Schwingungserzeuger ebenfalls an der Brücke befestigt ist. Im Gegensatz zu dem weiter oben angesprochenen bekannten Massendurchflußmeßgerät für die strömende Medien, das nach dem Coriolis-Prinzip arbeitet und das an eine bestehende Leitung eines Leitungssystems angebracht werden kann, sind der Meßwertaufnehmer und ein Schwingungserzeuger bei dem erfindungsgemäßen Massendurchflußmeßgerät an der Brücke befestigt. Damit kann das Massendurchflußmeßgerät als kompaktes Gerät in einer einzigen Einheit realisiert sein, so daß keine Positionierungsprobleme beim Anbringen des Massendurchflußmeßgeräts auf der Leitung auftreten.

Die Brücke des erfindungsgemäßen Massendurchflußmeßgeräts kann auf verschiedene Weisen an der Leitung befestigbar sein. Da die Brücke das Widerlager für den Meßwertaufnehmer bzw. den Schwingungserzeuger darstellt, ist es im Hinblick auf eine Schwingungsanregung mit größtmöglicher Amplitude bei einer möglichst guten Flexibilität der Leitung gemäß einer bevorzugten Ausführungsform der Erfindung vorgesehen, daß die Brücke an ihren längsseitigen Enden Befestigungseinrichtungen aufweist, mit denen die Brücke an der Leitung befestigbar ist. Auf diese Weise sind die Bereiche, an denen die Brücke an der Leitung befestigbar ist, im maximalen Abstand voneinander vorgesehen, so daß für die Anregungs-Schwingung bzw. die Coriolis-Schwingung der Leitung ein solcher Abschnitt der Leitung bereitsteht, der im wesentlichen der gesamten Länge der Brücke entspricht. Je länger der anregbare und damit schwingungsfähige Bereich der Leitung ist, um so leichter läßt sich eine Anregungs-Schwingung erzeugen und aufrechterhalten.

Die Befestigungseinrichtungen an den längsseitigen Enden der Brücke können auf verschiedene Arten realisiert werden, z. B. können Bolzen oder Schrauben vorgesehen sein, mit denen eine Befestigung der Brücke an der Leitung erfolgt. Gemäß einer bevorzugten Weiterbildung der Erfindung ist jedoch vorgesehen, daß die Befestigungseinrichtungen von senkrecht zur Längsrichtung der Leitung verlaufenden Bereichen der Brücke gebildet werden. Somit sind die Befestigungseinrichtungen einstückig mit der Brücke ausgebildet, was einerseits zu einer kompakten Ausgestaltung von Brücke und Befestigungseinrichtungen führt und andererseits eine optimale Stabilität und Kraftübertragung ermöglicht.

Die Querschnittsform der Brücke ist im Prinzip beliebig. Dementsprechend kann die Brücke im Querschnitt z. B. U-förmig, V-förmig oder auf verschiedene Weisen gekrümmt bzw. gebogen sein. Da im allgemeinen jedoch die Leitungen, an die die Brükke des erfindungsgemäßen Massendurchflußmeßgeräts angebracht werden soll, im Querschnitt kreisförmig sind, ist gemäß einer bevorzugten Weiterbildung der Erfindung vorgesehen, daß die Brücke im Querschnitt kreisausschnittsförmig ist. Auf diese Weise kann bei einer entsprechenden Anpassung des Radius der Brücke an den Radius der Leitung ein Massendurchflußmeßgeräte mit geringst möglichen Außenabmessungen erzielt werden.

Die Brücke kann zur Montage an der Leitung z. B. an die Leitung angeschweißt werden. Da unter Umständen jedoch zu einem späteren Zeitpunkt eine Verwendung des erfindungsgemäßen Massendurchflußmeßgeräts an einer anderen Stelle des Leitungssystems bzw. in einer ganz anderen Anlage vorgesehen ist, ist gemäß einer bevorzugten Weiterbildung der Erfindung vorgesehen, daß die Brücke an der Leitung lösbar befestigbar ist. Dies kann z. B. dadurch realisiert werden, daß die Brücke auf die Leitung aufklemmbar ist. Dafür sind verschiedene Klemmeinrichtungen denkbar, es ist jedoch besonders bevorzugt, daß die Brücke mit Hilfe von Schellen auf die Leitung aufklemmbar ist. Solche Schellen umschließen den von der Brücke nicht umschlossenen Bereich der Leitung und können so weit festgezogen werden, so daß es zu einem sicheren Halt der Brücke auf der Leitung durch Reibschluß kommt.

Das erfindungsgemäße Massendurchflußmeßgerät für strömende Medien, das nach dem Coriolis-Prinzip arbeitet, kann alleine mit der zuvor beschriebenen Brücke betrieben werden, die wenigstens einen Meßwertaufnehmer und gegebenenfalls einen Schwingungserzeuger aufweist. An dieser Stelle sei angemerkt, daß für die Auswertung der Meßwerte sowie für die Ansteuerung eines gegebenenfalls vorhandenen Schwingungserzeugers selbstverständlich eine entsprechende Elektronik vorhanden sein muß, wie das bei herkömmlichen Massendurchflußmeßgeräten, die über Flansche in ein Leitungssystem eingebaut werden, auch der Fall ist.

Darüber hinaus kann es jedoch aus verschiedenen Gründen vorteilhaft sein, ein an der Brücke befestigbares Gegenstück vorzusehen. Zum Beispiel kann die Brücke mit Hilfe dieses Gegenstückes auf die Leitung aufklemmbar sein. Vorzugsweise ist dabei vorgesehen, daß das Gegenstück mit der Brücke verschraubbar ist, jedoch sind auch andere Verbindungsmöglichkeiten denkbar. Insbesondere ist vorgesehen, daß das Gegenstück vorzugsweise im Querschnitt kreisausschnittsförmig ist, so daß im Zusammenwirken mit einer im Querschnitt ebenfalls kreisausschnittsförmigen Brücke ein im Querschnitt kreisförmiges Gehäuse erzielt wird.

Unabhängig von der Querschnittsform der Brücke bzw. des Gegenstücks ist gemäß einer bevorzugten Weiterbildung der Erfindung vorgesehen, daß im an der Leitung montierten Zustand des Massendurchflußmeßgeräts die Brücke und das an der Brücke befestigte Gegenstück die Leitung auf der gesamten Länge der Brücke vollständig radial umschließen. Auf diese Weise sind der Meßwertaufnehmer und der Schwingungserzeuger von radialer Richtung der Leitung her unzugänglich und dementsprechend vor ungewollten Zugriffen und Störungen von der Seite bzw. von oben oder von unten her sicher.

Alternativ oder ergänzend dazu ist vorzugsweise vorgesehen, daß die Brücke und das Gegenstück an ihren Längsenden jeweils Stirnwände mit einer Ausnehmung für die Leitung aufweisen und im an der Leitung montierten Zustand des Massendurchflußmeßgeräts die Stirnwände den Bereich zwischen der Leitung und der Brücke bzw. dem Gegenstück vollständig bedecken. Insbesondere in Kombination mit der zuvor genannten vollständigen radialen Umschließung der Leitung durch die Brücke und das Gegenstück ist der Innenraum des Massendurchflußmeßgeräts, also der Bereich der von der Brücke und dem Gegenstück eingeschlossen wird, nunmehr überhaupt nicht mehr von außen erreichbar, ohne das Gegenstück und/oder die Brücke von der Leitung zu entfernen. Dies erhöht die zuvor angesprochene Sicherheit des Meßwertaufnehmers und des Schwingungserzeugers vor äußeren Störungen zusätzlich.

Grundsätzlich können der Meßwertaufnehmer und/oder der Schwingungserzeuger zur Montage der Brücke an der Leitung auf der Brücke verbleiben. Je nach Anordnung des Meßwertaufnehmers und/oder des Schwingungserzeugers kann es jedoch bevorzugt sein, daß zur Montage der Brücke an der Leitung der Meßwertaufnehmer und/oder der Schwingungserzeuger von der Brücke abnehmbar sind. Insbesondere ist es auf diese Weise möglich, den Meßwertaufnehmer und/oder den Schwingungserzeuger auf der der Brücke gegenüberliegenden Seite der Leitung vorzusehen.

Der Meßwertaufnehmer und/oder der Schwingungserzeuger können direkt an der Brücke befestigt sein, also auf deren Innenseite montiert sein. Gemäß einer bevorzugten Weiterbildung der Erfindung ist jedoch vorgesehen, daß auf der der Leitung zugewandten Seite der Brücke eine Trägerplatte vorgesehen ist, die Trägerplatte an der Brücke befestigt ist und der Schwingungserzeuger und/oder der Meßwertaufnehmer auf der Trägerplatte montiert sind. Dies entspricht einer indirekten Befestigung des Meßwertaufnehmers und/oder des Schwingungserzeugers an der Brücke. Vorteilhaft ist dabei, daß auf einfache Weise der Abstand der Trägerplatte von der Innenwand der Brücke in Abhängigkeit von dem Radius der Leitung, an der das Massendurchflußmeßgerät befestigt werden soll, variiert werden kann, so daß der Meßwertaufnehmer und/oder der Schwingungserzeuger immer optimal relativ zur Leitung positioniert sind.

Im einzelnen gibt es nun eine Vielzahl von Möglichkeiten, das erfindungsgemäße Massendurchflußmeßgerät für strömende Medien, das nach dem Coriolis-Prinzip arbeitet, auszugestalten und weiterzubilden. Dazu wird einerseits auf die dem Patentanspruch 1 nachgeordneten Patentansprüche und andererseits auf die nachfolgende detaillierte Beschreibung bevorzugter Ausführungsbeispiele unter Bezugnahme auf die Zeichnungen verwiesen. In der Zeichnung zeigt
- Fig. 1: ein Massendurchflußmeßgerät gemäß einem ersten bevorzugten Ausführungsbeispiel der Erfindung im Schnitt,
- Fig. 2: das Massendurchflußmeßgerät gemäß dem ersten bevorzugten Ausführungsbeispiel der Erfindung in einer perspektivischen Ansicht,
- Fig. 3: ein Massendurchflußmeßgerät gemäß einem zweiten bevorzugten Ausführungsbeispiel der Erfindung im Schnitt,
- Fig. 4: ein Massendurchflußmeßgerät gemäß einem dritten bevorzugten Ausführungsbeispiel der Erfindung im Schnitt und
- Fig. 5: das Massendurchflußmeßgerät gemäß dem dritten bevorzugten Ausführungsbeispiel der Erfindung in einer perspektivischen Ansicht.

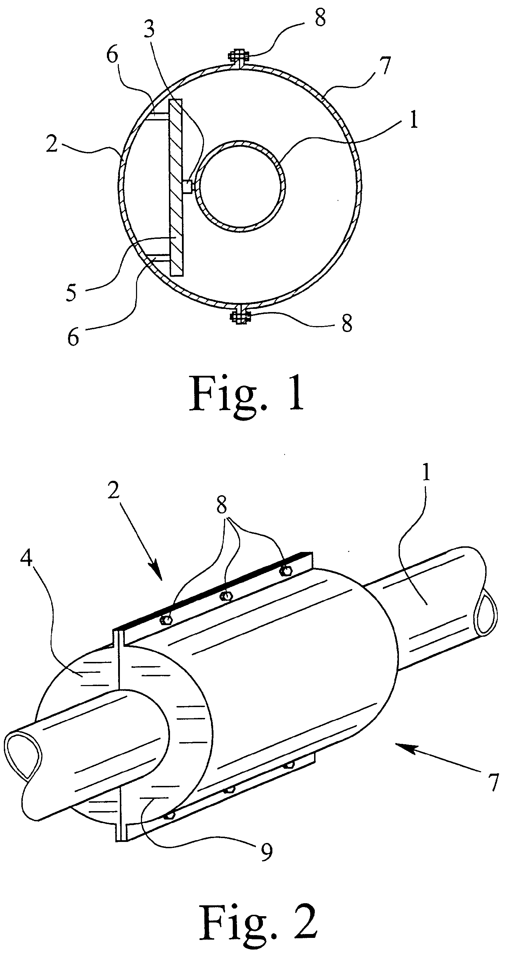

Aus den Fig. 1 und 2 ist im Schnitt bzw. in einer perspektivischen Ansicht ein Massendurchflußmeßgerät gemäß einem ersten bevorzugten Ausführungsbeispiel der Erfindung in einem an eine ein strömendes Medium führenden geraden Leitung 1 montierten Zustand ersichtlich. Zum Erfassen der Coriolis-Schwingungen sind zwei in Längsrichtung der Leitung 1 im Abstand voneinander angeordnete, jedoch nicht weiter dargestellte Meßwertaufnehmer vorgesehen. Die äußere Begrenzung des Massendurchflußmeßgeräts wird von einer Brücke 2 gebildet, innerhalb derer sowohl die Meßwertaufnehmer als auch ein Schwingungserzeuger 3 vorgesehen sind. Die Brücke 2 ist im Querschnitt im wesentlichen halbkreisförmig und weist an ihren Enden senkrecht zur Längsrichtung der Leitung 1 verlaufende Bereiche 4 auf. Diese senkrecht zur Längsrichtung der Leitung 1 verlaufende Bereiche 4 weisen jeweils eine halbkreisförmige Ausnehmung auf, deren Innendurchmesser gerade genau dem Außendurchmesser der Leitung 1 entsprechen, auf die das Massendurchflußmeßgerät montiert ist. Auf diese Weise dienen diese Bereiche 4 der Brücke 2 als Befestigungseinrichtungen, mit Hilfe derer die Brücke 2 an der Leitung 1 befestigt werden kann.

Die Befestigung der Meßwertaufnehmer und des Schwingungserzeugers 3 an der Brücke 2 ist mit Hilfe einer Trägerplatte 5 realisiert, die ihrerseits über Stege 6 an der Innenseite der Brücke 2 befestigt ist. Dies entspricht einer mittelbaren, nämlich mit Hilfe der Trägerplatte 5 realisierten Befestigung der Meßwertaufnehmer sowie des Schwingungserzeugers 3 an der Brücke 2. An der Brücke 2 ist ferner ein im wesentlichen dieselbe Form wie die Brücke 2 aufweisendes Gegenstück 7 befestigt. Die Befestigung des Gegenstücks 7 an der Brücke 2 erfolgt mit Hilfe von Schrauben 8, mit denen die Brücke 2 und das Gegenstück 7 an einander entsprechenden, in radialer Richtung der Leitung 1 verlaufenden Bereichen fest zusammengeschraubt sind. Durch diese Verschraubungen wird eine sichere, jedoch lösbare Befestigung des Gegenstücks 7 an der Brücke 2 erzielt. Die Leitung 1 ist somit radial vollständig von der Brücke 2 und dem Gegenstück 7 umschlossen, so daß sozusagen ein im Querschnitt kreisförmiges Gehäuse für die Leitung 1 gebildet wird, was einen Zugriff auf die Meßwertaufnehmer und den Schwingungserzeuger 3 und damit eine Störung derselben von radialer Richtung der Leitung 1 her verhindert. Außerdem ist die Brücke 2 mit Hilfe des Gegenstücks 7 auf die Leitung 1 aufklemmbar, nämlich dadurch, daß einerseits die Bereiche 4 der Brücke 2, die senkrecht zur Längsrichtung der Leitung 1 verlaufen, die oben beschriebenen, genau dem Außendurchmesser der Leitung 1 entsprechende Ausnehmungen aufweisen, und daß andererseits den Bereichen 4 der Brücke 2 entsprechende, senkrecht zur Längsrichtung der Leitung 1 verlaufende Bereiche 9 des Gegenstücks 7 vorgesehen sind, so daß durch das Zusammenschrauben der Brücke 2 mit dem Gegenstück 7 ein Preßsitz auf der Leitung 1 erzielt wird.

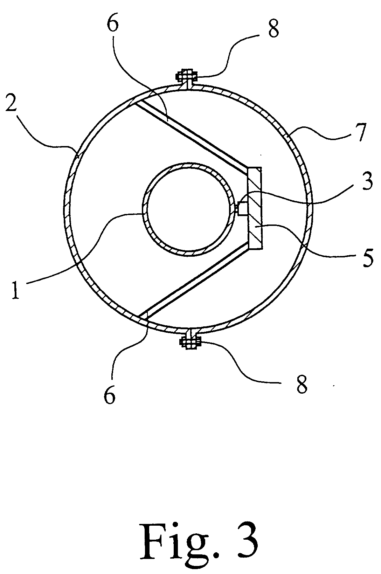

Aus Fig. 3 ist ein Massendurchflußmeßgerät gemäß einem zweiten bevorzugten Ausführungsbeispiel der Erfindung ersichtlich, bei dem die Trägerplatte 5 auf der der Brücke 2 gegenüberliegenden Seite der Leitung 1 vorgesehen ist. Ansonsten entspricht das Massendurchflußmeßgerät gemäß dem zweiten bevorzugten Ausführungsbeispiel der Erfindung im wesentlichen dem aus den Fig. 1 und 2 ersichtlichen Massendurchflußmeßgerät. Allerdings ist es bei der aus Fig. 3 ersichtlichen Anordnung der Trägerplatte 5 erforderlich, daß die Trägerplatte 5 mit den Meßwertaufnehmern und dem Schwingungserzeuger 3 zur Montage der Brücke 2 an der Leitung 1 von der Brücke 2 abnehmbar ist. Entsprechendes gilt für den Fall, daß der Meßwertaufnehmer und/oder der Schwingungserzeuger 3, ohne auf einer Trägerplatte 5 montiert zu sein, auf der der Brücke 2 gegenüberliegenden Seite der Leitung 1 vorgesehen sind. In diesem Fall müssen dementsprechend der Meßwertaufnehmer und/oder der Schwingungserzeuger 3 zur Montage der Brücke 2 an der Leitung 1 von der Brücke 2 abnehmbar sein.

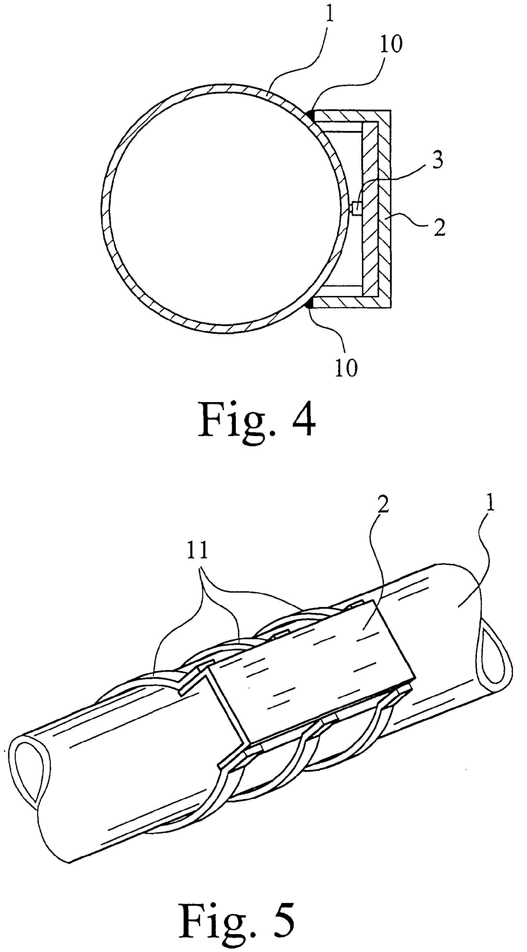

Aus den Fig. 4 und 5 schließlich ist ein Massendurchflußmeßgerät gemäß einem dritten bevorzugten Ausführungsbeispiel der Erfindung in einem Schnitt bzw. in einer perspektivischen Ansicht ersichtlich. Fig. 4 zeigt, daß das Massendurchflußmeßgerät gemäß dem dritten bevorzugten Ausführungsbeispiel der Erfindung an eine Leitung 1 angebracht werden kann, die einen sehr großen Durchmesser aufweist. Die Brücke 2 des Massendurchflußmeßgeräts umschließt dabei nicht den gesamten Durchmesser der Leitung 1, sondern ist lediglich an einem Seitenbereich der Leitung 1 befestigt. Dementsprechend ist für das Massendurchflußmeßgerät gemäß dem dritten bevorzugten Ausführungsbeispiel der Erfindung auch kein solches Gegenstück vorgesehen, wie unter Bezugnahme auf die Fig. 1 bis 3 beschrieben.

Die Befestigung der Brücke 2 an der Leitung 1 kann stattdessen z. B. durch Anschweißen der Brücke 2 an die Leitung 1 erfolgen. Aus Fig. 4 ist ersichtlich, daß die Brücke 2 mittels Verschweißungen 10 an ihren Seiten an der Leitung 1 befestigt sein kann. Dies macht jedoch ein einfaches Ablösen und Weiterverwenden der Brücke 2 für einen anderen Einsatz praktisch unmöglich. Insofern ist, wie aus Fig. 5 ersichtlich, im Falle des Massendurchflußmeßgeräts gemäß dem dritten bevorzugten Ausführungsbeispiel der Erfindung typischerweise vorgesehen, daß die Brücke 2 mit Hilfe von Schellen 11 in Preßsitz auf der Leitung 1 gehalten wird. Insbesondere wenn die Endbereiche der Brücke 2 offen sind, also keine Anpassung der Endbereiche an die Krümmung einer bestimmten Leitung 1 vorgesehen ist, kann das Massendurchflußmeßgerät gemäß dem dritten bevorzugten Ausführungsbeispiel der Erfindung bei der Verwendung von flexiblen Schellen 11, die an unterschiedliche Leitungsdurchmesser angepaßt werden können, universell eingesetzt werden.

Schließlich sei noch darauf hingewiesen, daß dann, wenn zuvor von einem Meßwertaufnehmer bzw. von dem Meßwertaufnehmer gesprochen worden ist, selbstverständlich auch zwei Meßwertaufnehmer vorgesehen sein können, was üblicherweise der Fall ist.

## Patentansprüche

1. Massendurchflußmeßgerät für strömende Medien, das nach dem Coriolis-Prinzip arbeitet, zur Montage an eine ein strömendes Medium führende, vorzugsweise gerade Leitung (1), mit mindestens einem Meßwertaufnehmer, mit dem Coriolis-Kräfte und/oder auf Coriolis-Kräften beruhende Schwingungen der Leitung (1) erfaßbar sind, und mit einer Brücke (2), wobei der Meßwertaufnehmer (1) an der Brücke (2) befestigt ist und die Brücke (2) an der Leitung (1) befestigbar ist, **dadurch gekennzeichnet, daß** die Brücke (2) zur Montage an der Leitung (1) radial an diese ansetzbar ist.

2. Massendurchflußmeßgerät nach Anspruch 1, **dadurch gekennzeichnet, daß** mindestens ein Schwingungserzeuger (3) vorgesehen ist, mit dem die Leitung (1) anregbar ist, und der Schwingungserzeuger (3) an der Brücke (2) befestigt.

3. Massendurchflußmeßgerät nach Anspruch 1 oder 2, **dadurch gekennzeichnet, daß** die Brücke (2) an ihren längsseitigen Enden Befestigungseinrichtungen aufweist, mit denen die Brücke (2) an der Leitung (1) befestigbar ist.

4. Massendurchflußmeßgerät nach Anspruch 3, **dadurch gekennzeichnet, daß** die Befestigungseinrichtungen von senkrecht zur Längsrichtung der Leitung (1) verlaufenden Bereichen (4) der Brücke (2) gebildet werden.

5. Massendurchflußmeßgerät nach einem der Ansprüche 1 bis 4, **dadurch gekennzeichnet, daß** die Brücke (2) im Querschnitt kreisausschnittsförmig ist.

6. Massendurchflußmeßgerät nach einem der Ansprüche 1 bis 5, **dadurch gekennzeichnet, daß** auf der der Leitung (1) zugewandten Seite der Brücke (2) eine Trägerplatte (5) vorgesehen ist, die Trägerplatte (5) an der Brücke (2) befestigt ist und der Schwingungserzeuger (3) und/oder der Meßwertaufnehmer auf der Trägerplatte (5) montiert sind.

7. Massendurchflußmeßgerät nach einem der Ansprüche 1 bis 6, **dadurch gekennzeichnet, daß** die Brücke (2) an der Leitung (1) lösbar befestigbar ist.

8. Massendurchflußmeßgerät nach Anspruch 7, **dadurch gekennzeichnet, daß** die Brücke (2) auf die Leitung (1) aufklemmbar ist.

9. Massendurchflußmeßgerät nach einem der Ansprüche 1 bis 8, **dadurch gekennzeichnet, daß** ein an der Brücke (2) befestigbares Gegenstück (7) vorgesehen ist.

10. Massendurchflußmeßgerät nach Anspruch 9, **dadurch gekennzeichnet, daß** die Brücke (2) mit Hilfe des Gegenstücks (7) auf die Leitung aufklemmbar ist.

11. Massendurchflußmeßgerät nach Anspruch 9 oder 10, **dadurch gekennzeichnet, daß** das Gegenstück (7) mit der Brücke (2) verschraubbar ist.

12. Massendurchflußmeßgerät nach einem der Ansprüche 9 bis 11, **dadurch gekennzeichnet, daß** das Gegenstück (7) im Querschnitt kreisausschnittsförmig ist.

13. Massendurchflußmeßgerät nach einem der Ansprüche 9 bis 12, **dadurch gekennzeichnet, daß** im an der Leitung (1) montierten Zustand des Massendurchflußmeßgeräts die Brücke (2) und das an der Brücke (2) befestigte Gegenstück (7) die Leitung (1) auf der gesamten Länge der Brücke (2) vollständig radial umschließen.

14. Massendurchflußmeßgerät nach Anspruch 8, **dadurch gekennzeichnet, daß** die Brücke (2) mit Hilfe von Schellen (11) auf die Leitung (1) aufklemmbar ist.

15. Massendurchflußmeßgerät nach einem der Ansprüche 1 bis 14, **dadurch gekennzeichnet, daß** der Schwingungserzeuger (3) und/oder der Meßwertaufnehmer zur Montage der Brücke (2) an der Leitung (1) von der Brücke (2) abnehmbar sind.
